(19) Europäisches Patentamt

European Patent Office

Office européen des brevets

(11) **EP 1 516 465 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.[7]: **H04L 25/02**, H04B 7/08

(21) Anmeldenummer: 03732527.1

(86) Internationale Anmeldenummer:
**PCT/EP2003/005856**

(22) Anmeldetag: **04.06.2003**

(87) Internationale Veröffentlichungsnummer:
**WO 2004/004258 (08.01.2004 Gazette 2004/02)**

(54) **VERFAHREN ZUR ERMITTLUNG VON NUTZSIGNALPARAMETERN UND STÖRSIGNALPARAMETERN AUS EINEM EMPFANGSSIGNAL EINES FUNKKOMMUNIKATIONSSYSTEMS**

METHOD FOR DETERMINING USEFUL SIGNAL PARAMETERS AND INTERFERENCE SIGNAL PARAMETERS FROM A RECEIVED SIGNAL IN A RADIO COMMUNICATION SYSTEM

PROCEDE POUR DETERMINER DES PARAMETRES DE SIGNAL UTILE ET DES PARAMETRES DE SIGNAL PARASITE A PARTIR D'UN SIGNAL DE RECEPTION D'UN SYSTEME DE RADIOCOMMUNICATION

(84) Benannte Vertragsstaaten:
**AT BE BG CH CY CZ DE DK EE ES FI FR GB GR HU IE IT LI LU MC NL PT RO SE SI SK TR**

(30) Priorität: **27.06.2002 DE 10228740**
**27.06.2002 EP 02014373**

(43) Veröffentlichungstag der Anmeldung:
**23.03.2005 Patentblatt 2005/12**

(73) Patentinhaber: **SIEMENS AKTIENGESELLSCHAFT**
**80333 München (DE)**

(72) Erfinder:
• **FREY, Thomas**
**89081 Ulm (DE)**
• **GRUNDLER, Thomas**
**71638 Ludwigsburg (DE)**
• **KIESSLING, Mario**
**89075 Ulm (DE)**
• **REINHARDT, Markus**
**89231 Neu-Ulm (DE)**
• **SEEGER, Alexander**
**85622 Feldkirchen (DE)**
• **VIERING, Ingo**
**89075 Ulm (DE)**

(56) Entgegenhaltungen:
**US-A- 6 118 832**

• **CHAUFRAY J-M ET AL: "Consistent estimation of Rayleigh fading channel second-order statistics in the context of the wideband CDMA mode of the UMTS" IEEE TRANSACTIONS ON SIGNAL PROCESSING, IEEE, INC. NEW YORK, US, Bd. 49, Nr. 12, Dezember 2001 (2001-12), Seiten 3055-3064, XP002200959 ISSN: 1053-587X**
• **VIERING I ET AL: "Improving Uplink Adaptive Antenna Algorithms for WCDMA by Covariance Matrix Compensation" VTC 2002 FALL. IEEE VTS 56TH. VEHICULAR TECHNOLOGY CONFERENCE. VANCOUVER, CANADA, SEPTEMBER 24 - 28, 2002, IEEE VEHICULAR TECHNOLOGY CONFERENCE, NEW YORK, NY: IEEE, US, Bd. 4, 24. - 28. September 2002, Seiten 2159-2153, XP002219059**

**Beschreibung**

Die Erfindung betrifft ein Verfahren zur Ermittlung von Nutzsignalparametern und Störsignalparametern aus einem Empfangssignal eines Funkkommunikationssystems, bei dem aus dem Empfangssignal einerseits anhand einer kohärenten Kurzzeitmittelung und einer inkohärenten Langzeitmittelung geschätzte Nutzsignalparameter und andererseits anhand einer inkohärenten Langzeitmittelung geschätzte Störsignalparameter gewonnen werden.

Bei einem Funkkommunikationssystem bzw. bei einem Mobilfunksystem weisen Funkübertragungskanäle sowohl Kurzzeiteigenschaften als auch Langzeiteigenschaften auf, die empfangsseitig sowohl Nutzsignalparameter als auch Störsignalparameter eines Empfangssignals beeinflussen.

Dabei werden die Kurzzeiteigenschaften empfangsseitig typischerweise durch sogenanntes "Fast-Fading" (Interferenzsituations-Änderungen) oder durch im Wellenlängenbereich liegende Bewegungen eines mobilen Teilnehmers beeinflusst, während die Langzeiteigenschaften typischerweise durch Umgebungsänderungen beeinflusst werden, z.B. durch Verschiebungen von Funkausbreitungspfaden, die sich empfangsseitig bezüglich Einfallswinkel oder Verzögerungszeiten oder durch Abschattung verändern.

Um Teilnehmersymbole eines Empfangssignals kohärent detektieren zu können, werden zur Detektion die Kurzzeiteigenschaften als aktuelle Funkübertragungskanaleigenschaften benötigt, die als Kanalimpulsantworten nach Betrag und Phase mit Hilfe von vorbekannten Trainingssymbolen aus dem Empfangssignal abschätzbar sind.

Durch eine kohärente Mittelung wird bei den Kanalimpulsantworten im Vergleich zum Empfangssignal ein erhöhter Signal-Störabstand (SNR) erreicht. Bei der kohärenten Mittelung ist eine Mittelungslänge mit einer Obergrenze vorgegeben, die abhängig von schnell erfolgende Änderungen des Funkübertragungskanals festgelegt wird.
Zusätzlich sind die Trainingssymbole systembedingt in ihrer Anzahl begrenzt. Bei einem theoretisch maximal zu erreichenden Signal-Störabstand kommt es somit ebenfalls zu einer Begrenzung.

Diejenigen Eigenschaften des Funkübertragungskanals, die sich vergleichend zu den Impulsantworten über längere Beobachtungszeiten verändern (Laufzeitverzögerungen, Änderungen des Signal-Störabstands, Änderungen bei zu bestimmenden Kovarianzmatrizen, u.s.w.) werden als Langzeitparameter mit Hilfe einer inkohärenten Langzeitmittelung aus dem Empfangssignal bestimmt. Dadurch ist bei den Langzeitparametern eine deutlich höhere Zuverlässigkeit als bei den Impulsantworten zu erzielen. Die Langzeitparameter wiederum basieren auf den Impulsantworten.
Bei einer Erhöhung der Mittelungslänge wird hier jedoch der Signal-Störabstand SNR bei der Schätzung der Langzeitparameter nicht verbessert, sondern lediglich die Varianz der Langzeitparameter geht gegen null.

Störsignalparameter, die in der Regel mit Hilfe einer inkohärenten Langzeitmittelung aus einem Empfangssignal ermittelt werden, enthalten neben den tatsächlichen Störsignalanteilen noch Nutzsignalanteile und verhalten sich bezüglich ihrer Varianz entsprechend.

Nutzsignalparameter, die in der Regel, mit Hilfe einer kohärenten Kurzzeitmittelung und einer inkohärenten Langzeitmittelung aus einem Empfangssignal durch Schätzung ermittelt werden, enthalten neben den tatsächlichen Nutzsignalanteilen noch Störsignalanteile.

Selbst bei einer theoretisch unendlich andauernden Mittelung verbleibt somit ein systematischer Schätzfehler sowohl bei den Nutzsignalparametern als auch bei den Störsignalparametern, die bei praktischen Anwendungen im allgemeinen vernachlässigt werden.

Aus "Consistent Estimation of Rayleigh Fading Channel Second-Order Statistics in the Context of the Wideband CDMA Mode of the UMTS", Chaufray et al., IEEE TRANSACTIONS ON SIGNAL PROCESSING, IEEE, Inc. New York, US, Bd. 49 Nr. 12, Dezember 2001 (2001-12) Seiten 3055 bis 3064, XP 002200959, ISSM 1053-587X ist ein Verfahren bekannt, bei dem anhand einer konsistenten Schätzung eine Kovarianzmatrix ermittelt und basierend darauf Kanalschätzungen durchgeführt werden.

Es ist daher Aufgabe der vorliegenden Erfindung, mit geringem Schätzfehler behaftete Nutz- und Störsignalparameter aus einem Empfangssignal zu gewinnen.

Die Aufgabe der Erfindung wird durch die Merkmale des Anspruchs 1 gelöst. Vorteilhafte Weiterbildungen der Erfindung sind in den Unteransprüchen angegeben.

Durch das erfindungsgemäße Verfahren werden die beschriebenen systematischen Schätzfehler sowohl bei den Nutzsignalparametern als auch bei den Störsignalparametern vollständig kompensiert.

Die Nutzsignalparameter und die Störsignalparameter werden mit Hilfe herkömmlicher Methoden geschätzt und einer erfindungsgemäßen gegenseitigen Kompensation des Schätzfehlers zur Gewinnung von optimierten Nutzsignalparametern bzw. optimierten Störsignalparametern zugeführt.

Alternativ ist es erfindungsgemäß möglich, aus den mit dem systematischen Schätzfehler behafteten geschätzten Nutzsignalparameter bzw. geschätzten Störsignalparameter ein Ergebnis zu gewinnen und den Schätzfehler nachträglich zu kompensieren. Dabei wird vorteilhaft benötigte Rechenkomplexität reduziert.

Besonders bei Anwendungen mit sehr niedrigem Signal-Störabstand (wie beispielsweise bei einem auf Antennensignalen angewendeten Beamforming-Verfahren) werden durch die erfindungsgemäße Kompensation des Schätzfehlers je nach Anwendung beträchtliche Übertragungsverbesserungen erreicht.

Je nach Übertragungs-Szenario hat ein vernachlässigter Schätzfehler starke negative Auswirkungen, die mit Hilfe des erfindungsgemäßen Verfahrens verhindert werden.

Besonders vorteilhaft wird das erfindungsgemäße Verfahren beim sogenannten "DS-CDMA-Funkkommunikationssystem", bei dem Teilnehmersignale mit Hilfe von quasi-orthogonalen Codes übertragen werden, eingesetzt. Hier ist der Nutzsignalanteil beim Empfangssignal gegenüber dem Störsignal sehr klein. Bislang wurden üblicherweise die Störsignalparameter durch Schätzung ermittelt und inklusive Schätzfehler zur Eliminierung eines Störsignalanteils bei den Nutzsignalparametern verwendet. Durch Anwendung des erfindungsgemäßen Verfahrens ist zukünftig dieser Schätzfehler vollständig kompensierbar.

Im Folgenden wird die Erfindung anhand von fünf Anwendungsbeispielen näher erläutert.

Ein erstes Beispiel zeigt eine Anwendung des erfindungsgemäßen Verfahrens bei einer Bestimmung eines Signal-Störabstands SNR.

Im folgenden Beispiel gilt:

S  Nutzsignalleistung als optimierter Nutzsignalparameter,

N  Störsignalleistung als optimierter Störsignalparameter,

S'  Nutzsignalleistung als geschätzter Nutzsignalparameter, und

N'  Störsignalleistung als geschätzter Störsignalparameter.

Der geschätzte Nutzsignalparameter S' bzw. der geschätzte Störsignalparameter N' beinhaltet jeweils einen Anteil des anderen Signalparameters sowie einen zusätzlichen Schätzfehler $\Delta S$ bzw. $\Delta N$, der durch eine nur endlich durchgeführte Langzeitmittelung bedingt wird.

Es gilt somit:

$$S' = S + k*N + \Delta S$$

$$N' = N + g*S + \Delta N$$

Die beiden Faktoren k bzw. g werden als vorbekannt betrachtet.

Der Faktor k ist nur von der kohärenten Mittelungslänge abhängig, nicht jedoch von der endlichen Langzeitmittelungslänge.

Der Faktor k ist beispielsweise indirekt proportional zur kohärenten Kurzzeit-Mittelungslänge (beispielsweise zur Chipanzahl pro Pilotsymbol multipliziert mit der Pilotsymbolanzahl) und direkt proportional zum Leistungsanteil der Trainingssequenz am Gesamtsignal.

Der Faktor k wird mit zunehmender kohärenter Kurzzeit-Mittelungslänge geringer und ist typischerweise erheblich kleiner als Eins. Die Langzeitmittlung verringert die Varianz der Schätzwerte, wodurch $\Delta S$ bzw. $\Delta N$ gegen Null streben.

Für den geschätzten Störsignalparameter N' ist im allgemeinen eine kohärente Mittelung nicht durchführbar.

Der Faktor g ist von einer endlichen Langzeit-Mittelungslänge unabhängig. In den meisten Fällen ist g=1.

Der oben genannte Nutzsignalparameter S' wird mit Hilfe einer kohärenten Kurzzeitmittelung und einer inkohärenten Langzeitmittelung aus einem Empfangssignal geschätzt während mit Hilfe einer inkohärenten Langzeitmittelung aus dem Empfangssignal der Störsignalparameter N' geschätzt wird.

Im folgenden wird zur Vereinfachung eine ideale inkohärente Langzeitmittelung angenommen, d. h. $\Delta S=0$ bzw. $\Delta N=0$.

Nun wird erfindungsgemäß der optimierte Nutzsignalparameter S und der optimierte Störsignalleistung N mit kompensiertem Schätzfehler bestimmt. Mit g=1 ergibt sich:

$$S' = S + k*N$$

$$N' = N + S$$

und aufgelöst:

$$S = \frac{1}{1-k}\ S' - \frac{k}{1-k}\ N'$$

$$N = \frac{1}{1-k}\ N' - \frac{1}{1-k}\ S'$$

Der Signal-Störabstand SNR kann nun mit eliminiertem Schätzfehler ermittelt werden:

$$SNR = S / N.$$

Alternativ dazu kann zuerst ein mit Schätzfehler behafteter Signal-Störabstand SNR' ermittelt werden:

$$SNR' = S' / N'$$

und nachfolgend der Schätzfehler kompensiert werden:

$$SNR' = \frac{S'}{N'} = \frac{SNR+k}{SNR+1}$$

$$SNR = \frac{SNR'\text{-}k}{1\text{-}SNR'}$$

Ein zweites Beispiel zeigt eine Anwendung des erfindungsgemäßen Verfahrens bei einer Kovarianzmatrix-Schätzung.

Viele Beamforming-Verfahren basieren auf einer sogenannten "Nutzsignal-KovarianzmaLtrix" $R_{ss}$ bzw. auf einer sogenannten Störsignal-Kovarianzmatrix $R_{nn}$.

Ähnlich zum ersten Beispiel werden geschätzte Parameter der Nutzsignal-Kovarianzmatrix $R_{ss}'$ mit Hilfe einer kohärenten Kurzzeitmittelung und einer inkohärenten Langzeitmittelung aus einem Empfangssignal gewonnen, während mit Hilfe einer inkohärenten Langzeitmittelung aus dem Empfangssignal geschätzte Parameter einer Störsignalkovarianzmatrix $R_{nn}$- gewonnen werden.

Im Folgenden gilt:

$R_{ss}$    als optimierte Nutssignal-Kovarianzmatrix,
$R_{nn}$    als optimierte Störsignal-Kovarianzmatrix,
$R_{ss}'$   als geschätzte Nutzsignal-Kovarianzmatrix, und
$R_{nn}'$   als geschätzte Störsignal-Kovarianzmatrix.

$$R_{ss}' = R_{ss} + k*R_{nn}$$

$$R_{nn}' = R_{nn} - R_{ss}$$

Nach Kompensation des Schätzfehlers ergibt sich die optimierte Nutzsignal-Kovarianzmatrix $R_{ss}$ bzw. die optimierte Störsignal-Kovarianzmatrix $R_{nn}$ zu:

$$R_{ss} = \frac{1}{1-k}R_{ss}' - \frac{k}{1-k}R_{nn}'$$

$$R_{nn} = \frac{1}{1-k}R_{nn}' - \frac{1}{1-k}R_{ss}'$$

Abhängig vom eingesetzten Verfahren können - verglichen mit Beispiel 1 - wiederum zunächst die fehlerhaften geschätzten Matrizen verarbeitet werden und erst nachfolgend die erfindungsgemäße Kompensation durchgeführt werden.

Ein drittes Beispiel zeigt eine Anwendung des erfindungsgemäßen Verfahrens beim sogenannten "Eigen-Beamforming".

Das Eigen-Beamforming-Verfahren basiert auf Eigenwerten und Eigenvektoren der oben genannten Kovarianzmatrizen. Die zugrundegelegte Eigenwert-Gleichung lautet:

$$R_{ss}\vec{w}_i = \lambda_i R_{nn}\vec{w}_i$$

Verwendet man anstelle der korrekten, optimierten Kovarianzmatrizen $R_{ss}$ bzw. $R_{nn}$ die fehlerhaften, geschätzten Kovarianzmatrizen $R_{ss}'$ bzw. $R_{nn}'$, so erhält man als Eigenwertgleichung:

$$R_{ss}'\vec{w}_i' = \lambda_i' R_{nn}'\vec{w}_i'$$

Diese Gleichungen ergeben gleichartige Eigenvektoren mit sich unterscheidenden optimierten Eigenwerten $\lambda$ bzw. fehlerbehafteten Eigenwerten $\lambda$. Es gilt:

$$\vec{w}_i' = \vec{w}_i$$

$$\lambda_i = \frac{\lambda_i + k}{\lambda_i + 1}$$

$$\lambda_i = \frac{\lambda_i'\text{-}k}{1-\lambda_i'}$$

Ein viertes Beispiel zeigt eine Anwendung des erfindungsgemäßen Verfahrens beim sogenannten "Fixed-Beamforming.

Beim Fixed-Beamforming-Verfahren wird aus einer Menge unveränderlicher Strahlungsdiagramme (Beams) beispielsweise anhand des Signal-Störabstands ein Beam oder mehrere Beams ausgewählt. Jeder einzelne Beam i bzw. jedes einzelne Beamsignal lässt sich durch einen Zeilenvektor $\vec{w}_i^H$ darstellen, der jeweils zugeordnete komplexe Antennengewichtsfaktoren enthält.

Sowohl Nutzsignalleistung $S_i$ als auch Störsignalleistung $N_i$ beim i-ten Beam lassen sich in Abhängigkeit von den Kovarianzmatrizen $R_{ss}$ bzw. $R_{nn}$ angeben:

$$S_i = \vec{w}_i^H R_{ss}\vec{w}_i$$

$$N_i = \vec{w}_i^H R_{nn}\vec{w}_i$$

Die Verwendung der fehlerbehafteten geschätzten Kovarianzmatrizen führt zu den fehlerbehafteten Leistungen:

$$S_i' = \vec{w}_i^H R_{ss}'\vec{w}_i$$

$$N_i' = \vec{w}_i^H R_{nn}'\vec{w}_i$$

Wie im ersten Beispiel lautet das Kompensationsschema für die zugehörigen optimierten Signal-Störabstände SNR bzw. für die fehlerhaften Signal-

Störabstände SNR':

$$SNR_i = \frac{SNR_i' - k}{1 - SNR_i'} = \frac{S_i}{N_i}$$

$$SNR_i' = \frac{SNR_i + k}{SNR_i + 1} = \frac{S_i'}{N_i'}$$

Ein fünftes Beispiel zeigt eine Anwendung des erfindungsgemäßen Verfahrens beim sogenannten "Hybriden-Beamforming".

Beim Hybriden-Beamforming ist in einer ersten Stufe ein sogenannter Fixed-Beamformer enthalten. Die Kompensation des Schätzfehlers wird wie oben beschrieben durchgeführt.

Der ersten Stufe ist eine zweite Stufe nachgeschaltet und beinhaltet einen Eigen-Beamformer, der nun auf den entsprechenden Beamsignalen arbeitet. Die Kompensation der Eigenwerte ist davon nicht betroffen.

Bei den oben beschriebenen Beamforming-Verfahren entstehen besonders dann erhebliche Gewinne durch die jeweiligen Kompensationen, wenn die Störsignal-Kovarianzmatrix (als Interferenz- bzw. Noise-Kovarianzmatrix) keine Einheitsmatrix ist. Dies ist der Fall, wenn räumlich gerichtete Störungen vorliegen.

Dann erreicht ein Störsignal relativ leicht die Größenordnung des eigentlichen Nutzsignals, wodurch die Auswahl von geeigneten Beams für den Empfang bzw. für eine Störsignalunterdrückung erheblich gestört wird.

Durch die im zweiten bis fünften Beispiel dargestellten Kompensationsschemata wird dieser Nachteil überwunden.

## Patentansprüche

1. Verfahren zur Ermittlung von Nutzsignalparametern und Störsignalparametern aus einem Empfangssignal eines. Funkkommunikationssystems,

   - bei dem als Nutzsignalparameter aus dem Empfangssignal anhand einer kohärenten Kurzzeitmittelung und einer inkohärenten Langzeitmittelung eine geschätzte Nutzsignalleistung S' oder eine geschätzte Nutzsignal-Kovarianzmatrix $R_{ss}'$ mit geschätzten Nutzsignalparametern ermittelt wird,
   - bei dem als Störsignalparameter aus dem Empfangssignal anhand einer inkohärenten Langzeitmittelung eine geschätzte Störsignalleistung N' oder eine geschätzte Störsignal-Kovarianzmatrix $R_{nn}'$ mit geschätzten Stärsignalparametern ermittelt wird,
   - bei dem eine optimierte Nutzsignalleistung S und eine optimierte Störsignalleistung N oder eine optimierte Nutzsignal-Kovarianzmatrix $R_{ss}$ mit optimierten Nuttsignalparametern und eine optimierte Störsignal-Kovarianzmatrix $R_{nn}$ mit optimierten Störsignalparametern mit jeweils kompensiertem Schätzfehler wie folgt berechnet wird:

$$S = \frac{1}{1 - k} S' - \frac{k}{1 - k} N'$$

$$N = \frac{1}{1 - k} N' - \frac{1}{1 - k} S'$$

$$R_{ss} = \frac{1}{1 - k} R_{ss}' - \frac{k}{1 - k} R_{nn}'$$

$$R_{nn} = \frac{1}{1 - k} R_{nn}' - \frac{1}{1 - k} R_{ss}'$$

mit k als Rauschunterdrückungsfaktor.

2. Verfahren nach Anspruch 1, bei dem ein schätzfehlerkompensierter Signal-Störabstand SNR bestimmt

$$SNR = \frac{SNR' - k}{1 - SNR'} = \frac{S}{N}$$

wird durch:
mit SNR'= S'/ R' als schätzfehlerbehaftetem Signal-Störabstand.

3. Verfahren nach Anspruch 1, bei dem bei einem Eigen-Beamforming-Verfahren optimierte Eigenwerte $\lambda_i$ bestimmt werden durch:

$$R_{ss}\vec{w}_i = \lambda_i R_{nn}\vec{w}_i$$

$$R_{ss}'\vec{w}_i' = \lambda_i' R_{nn}'\vec{w}_i'$$

mit $w_i'= w_i$ als Eigenvektoren,
und bei dem optimierte Eigenwerte $\lambda_i$ bzw. geschätzte Eigenwerte $\lambda_i$ bestimmt werden durch:

$$\lambda_i = \frac{\lambda_i' - k}{1 - \lambda_i'}$$

$$\lambda_i' = \frac{\lambda_i + k}{\lambda_i + 1}$$

4. Verfahren nach Anspruch 1, bei dem bei einem Fixed-. Beamforming-Verfahren eine optimierte Nutzsignalleistung $S_i$ und eine optimierte Störsignalleistung $N_i$ eines i-ten Beams bestimmt werden durch:

$$S_i' = \vec{w}_i^H\, R_{ss}'\, \vec{w}_i$$

$$N_i' = \vec{w}_i^H\, R_{nn}'\, \vec{w}_i$$

$$S_i = \vec{w}_i^H\, R_{ss}\, \vec{w}_i$$

$$N_i = \vec{w}_i^H\, R_{nn}\, \vec{w}_i$$

mit $S_i'$ als geschätzte Nutzsignalleistung und mit $N_i'$ als geschätzte Störsignalleistung.

5. Verfahren nach Anspruch 4, bei dem ein i-ter optimierter Signal-Störabstand SNR bestimmt wird durch:

$$SNR_i = \frac{SNR_i' - k}{1 - SNR_i'} = \frac{S_i}{N_i}$$

mit

$$SNR_i' = \frac{SNR_i + k}{1 + SNR_i} = \frac{S_i'}{N_i'}$$

als schätzfehlerbehaftetem Signal-Störabstand.

## Claims

1. Method for determining useful signal parameters and interference signal parameters from a received signal of a radio communication system,

   - in which an estimated useful signal power S' or an estimated useful signal covariance matrix $R_{ss}$ with useful signal parameters are determined from the received signal based on a coherent short-term averaging and an in coherent long-term averaging,
   - in which an estimated noise signal power N' or an estimated noise signal covariance matrix $R_{nn}$ with estimated noise signal parameters are determined from the received signal on the basis of an incoherent long-term averaging,
   - in which an optimized useful signal power S and an optimized noise signal power N or an optimized useful signal covariance matrix. $R_{nn}$ with optimized useful signal parameters and an optimized noise signal covariance matrix $R_{ss}$ with optimized interference signal parameters with compensated estimation errors is calculated as follows in each case:

$$S = \frac{1}{1-k}\, S' - \frac{k}{1-k}\, N'$$

$$N = \frac{1}{1-k}\, N' - \frac{1}{1-k}\, S'$$

$$R_{ss} = \frac{1}{1-k}\, R_{ss}' - \frac{k}{1-k}\, R_{nn}'$$

$$R_{nn} = \frac{1}{1-k}\, R_{nn}' - \frac{1}{1-k}\, R_{ss}'$$

with k as interference suppression factor.

2. Method according to claim 1, in which an estimation error compensation signal-to-noise ratio SNR is determined by:

$$SNR = \frac{SNR' - k}{1 - SNR'} = \frac{S}{N}$$

with SNR'= S'/ R' as estimated error-prone signal-to-noise ratio.

3. Method according to claim 1, in which, for an eigen-beamforming method optimized eigenvalues $\lambda_i$ are determined by:

$$R_{ss}\vec{w}_i = \lambda_i R_{nn}\vec{w}_i$$

$$R_{ss}'\vec{w}_i' = \lambda_i' R_{nn}'\vec{w}_i'$$

with $w_i' = w_i$ as eigenvectors,
and in which optimized eigenvalues $\lambda_i$ or estimated eigenvalues $\lambda_i'$ are determined by:

$$\lambda_i = \frac{\lambda_i' - k}{1 - \lambda_i'}$$

$$\lambda_i' = \frac{\lambda_i + k}{\lambda_i + 1}$$

4. Method according to claim 1, in which, with a fixed beamforming method an optimized useful signal power $S_i$ and an optimized noise signal power $N_i$ of an ith beam are determined by:

$$S_i' = \vec{w}_i^H\, R_{ss}'\vec{w}_i$$

$$N_i' = \vec{w}_i^H\, R_{nn}'\vec{w}_i$$

$$S_i = \vec{w}_i^H R_{ss} \vec{w}_i$$

$$N_i = \vec{w}_i^H R_{nn} \vec{w}_i$$

with $S_i'$ as estimated useful signal power and with $N_i'$ as estimated noise signal power.

**5.** Method according to claim 4, in which a ith optimized signal-to-noise ratio SNR is determined by:

$$SNR_i = \frac{SNR_i' - k}{1 - SNR_i'} = \frac{S_i}{N_i}$$

with

$$SNR_i' = \frac{SNR_i + k}{1 + SNR_i} = \frac{S_i'}{N_i'}$$

as estimated error-prone signal-to-noise ratio.

## Revendications

**1.** Procédé pour déterminer des paramètres de signal utile et des paramètres de signal parasite à partir d'un signal de réception d'un système de radiocommunication,

- dans lequel on détermine en tant que paramètres de signal utile, à partir du signal de réception, sur la base d'une formation de moyenne à court terme cohérente et d'une formation de moyenne à long terme incohérente, une puissance de signal utile estimée S' ou une matrice de covariance de signal utile estimée $R_{ss}'$ avec des paramètres de signal utile estimés,
- dans lequel on détermine en tant que paramètres de signal parasite, à partir du signal de réception, sur la base d'une formation de moyenne à long terme incohérente, une puissance de signal parasite estimée N' ou une matrice de covariance de signal parasite estimée $R_{nn}'$ avec des paramètres de signal parasite estimés,
- dans lequel une puissance de signal utile optimisée S et une puissance de signal parasite optimisée N ou une matrice de covariance de signal utile optimisée $R_{ss}$ avec des paramètres de signal utile optimisés et une matrice de covariance de signal parasite optimisée $R_{nn}$ avec des paramètres de signal parasite optimisés sont calculées de la manière suivante, avec respectivement une erreur d'estimation compensée :

$$S = \frac{1}{1-k} S' - \frac{k}{1-k} N'$$

$$N = \frac{1}{1-k} N' - \frac{1}{1-k} S'$$

$$R_{ss} = \frac{1}{1-k} R_{ss}' - \frac{k}{1-k} R_{nn}'$$

$$R_{nn} = \frac{1}{1-k} R_{nn}' - \frac{1}{1-k} R_{ss}'$$

avec k en tant que facteur de réduction du bruit.

**2.** Procédé selon la revendication 1, dans lequel un rapport signal-bruit SNR compensé de l'erreur d'estimation est déterminé par la formule :

$$SNR = \frac{SNR' - k}{1 - SNR'} = \frac{S}{N}$$

avec SNR' = S' / R' en tant que rapport signal-bruit affecté par l'erreur d'estimation.

**3.** Procédé selon la revendication 1, dans lequel des valeurs propres $\lambda_i$ optimisées sont déterminées, dans le cas d'un procédé de formation de faisceau propre, par les formules :

$$R_{ss} \vec{w}_i = \lambda_i R_{nn} \vec{w}_i$$

$$R_{ss}' \vec{w}_i' = \lambda_i' R_{nn}' \vec{w}_i'$$

avec $w_i' = wi$ en tant que vecteurs propres,
et dans lequel des valeurs propres optimisées $\lambda_i$ resp. des valeurs propres estimées $\lambda_i'$ sont déterminées par les formules :

$$\lambda_i = \frac{\lambda_i' - k}{1 - \lambda_i'}$$

$$\lambda_i' = \frac{\lambda_i + k}{\lambda_i + 1}$$

**4.** Procédé selon la revendication 1, dans lequel une puissance de signal utile optimisée $S_i$ et une puissance de signal parasite optimisée Ni d'un i ème faisceau sont déterminées, dans le cas d'un procédé de formation de faisceau fixe, par les formules :

$$S_i' = \vec{w}_i^H R_{ss}' \vec{w}_i$$

$$N_i' = \vec{w}_i^{H} R_{nn}' \vec{w}_i$$

$$S_i = \vec{w}_i^{H} R_{ss} \vec{w}_i$$

$$N_i = \vec{w}_i^{H} R_{nn} \vec{w}_i$$

avec $S_i'$ en tant que puissance de signal utile estimée et $N_i'$ en tant que puissance de signal parasite estimée.

5. Procédé selon la revendication 4, dans lequel un $i^{\text{ème}}$ rapport signal-bruit optimisé SNR est déterminé par la formule :

$$SNR_i = \frac{SNR'_i - k}{1 - SNR'_i} = \frac{S_i}{N_i}$$

avec

$$SNR'_i = \frac{SNR_i + k}{1 + SNR_i} = \frac{S'_i}{N'_i}$$

en tant que rapport signal-bruit affecté par l'erreur d'estimation.